Europäisches Patentamt

**European Patent Office**

Office européen des brevets

(19)

(11) Numéro de publication: **0 034 103**
**B1**

(12) # FASCICULE DE BREVET EUROPEEN

(45) Date de publication du fascicule du brevet:
**08.08.84**

(51) Int. Cl.³: **G 21 C 7/12,** G 21 C 19/10

(21) Numéro de dépôt: **81400218.4**

(22) Date de dépôt: **12.02.81**

(54) Perfectionnement aux dispositifs de commande des barres de réglage d'un réacteur nucléaire.

(30) Priorité: **12.02.80 FR 8003087**

(43) Date de publication de la demande:
**19.08.81 Bulletin 81/33**

(45) Mention de la délivrance du brevet:
**08.08.84 Bulletin 84/32**

(84) Etats contractants désignés:
**BE DE GB**

(56) Documents cités:
**FR - A - 1 241 783**
**FR - A - 1 350 846**
**FR - A - 2 137 015**
**GB - A - 965 014**
**US - A - 3 471 194**

(73) Titulaire: **Framatome, Tour Fiat 1 place de la Coupole,**
**F-92400 Courbevoie (FR)**

(72) Inventeur: **Desfontaines, Guy, 18 rue Jean Jaurès,**
**F-92800 Puteaux (FR)**

(74) Mandataire: **Bouget, Lucien et al,**
**CREUSOT-LOIRE 15 rue Pasquier, F-75383 Paris**
**Cedex 08 (FR)**

BUNDESDRUCKEREI BERLIN

## Description

La présente invention se rapporte à un perfectionnement aux dispositifs permettant d'assurer la translation des barres de réglage à l'intérieur d'une enceinte fermée dans un réacteur nucléaire.

On sait que l'on règle généralement la réactivité d'un réacteur nucléaire en réglant l'insertion, à l'intérieur du coeur, de barres de commande ayant la propriété d'absorber les neutrons, des variations lentes du niveau d'insertion de ces barres permettent de contrôler le niveau de puissance fourni par le coeur, leur insertion totale et rapide permettant de réaliser l'arrêt d'urgence du réacteur.

Le brevet FR-A-1 241 783 décrit un dispositif très classique selon lequel le mouvement lent d'une barre de commande est réalisé à l'aide d'un dispositif à vis et écrou, l'écrou étant bloqué en rotation et la vis bloquée en translation ou inversement. Un tel dispositif connu utilise pour soutenir l'ensemble vis-écrou, des bras d'accrochage dont la fermeture est actionnée par un électroaimant dont la bobine est placée sous le stator du moteur d'entraînement en rotation de la vis. L'insertion rapide de la barre de réglage dans le coeur du réacteur est obtenue par coupure de l'alimentation électrique de la bobine de l'électro-aimant, ce qui entraîne l'ouverture des bras d'accrochage, la libération de l'ensemble vis-écrou, et par suite la chute de la barre de réglage dans le coeur du réacteur jusqu'à sa position d'insertion maximale.

Ce genre de réalisation du type connu présente néanmoins un inconvénient. En effet, les règles de sécurité applicables aux réacteurs nucléaires imposent qu'en cas de séisme il soit, d'une part, possible de procéder à l'insertion rapide des barres de commande, d'autre part, que les enceintes assurant la rétention du fluide primaire conservent leur intégrité. Or, la présence de pôles et de bobinages supplémentaires sous le stator du moteur d'entraînement de la vis conduit à allonger et à alourdir le mécanisme et par suite à majorer les efforts et les déformations subis par ce dernier en cas de séisme.

La demande de brevet européen interférente EP 81 400 087.3 publicé sous le numéro EP-A3-0 033 271 décrit un dispositif de commande de barre de réglage de réacteur nucléaire qui est, en ce qui concerne les inconvénients précités, déjà très amélioré par rapport aux dispositifs de l'art antérieur. Il utilise des bras d'accrochage placés sous le rotor du moteur et reliés mécaniquement à celui-ci de telle sorte que la mise sous tension du stator dudit moteur, en provoquant une légère romentée du rotor, entraîne la fermeture des mâchoires constituant ces bras d'accrochage. Un tel dispositif comporte par ailleurs un organe de verrouillage permettant de maintenir ces mâchoires en position ouverte lorsque la vis qui fait partie du dispositif à vis et écrou n'est pas en position haute d'accrochage.

Le dispositif selon la présente invention permet d'alléger et de raccourcir encore plus le mécanisme permettant le décrochage rapide de l'ensemble vis-écrou, tout en le simplifiant encore. Ce dispositif est également du type comportant une enceinte tubulaire étanche associée à un moteur d'entraînement dont le rotor est situé à l'intérieur de ladite enceinte et le stator à l'extérieur de celle-ci, la rotation dudit moteur entraînant la montée ou la descente de la barre de réglage par l'intermédiaire d'une transmission du genre vis-écrou, ledit rotor étant muni d'organes d'accrochage de ladite vis en position haute de celle-ci, lesdits organes d'accrochage étant commandés par action électromagnétique à partir des bobines dudit stator de façon à ce qu'ils soient en position de fermeture sur ladite vis lorsque lesdites bobines sont alimentées, et à ce qu'ils se mettent en position d'ouverture lorsque les bobines ne sont plus alimentées de façon à laisser choir l'ensemble du genre vis-écrou, dispositif comportant en outre un organe de verrouillage desdits organes d'accrochage permettant de maintenir ceux-ci en position ouverte lorsque ladite vis n'est pas en position haute d'accrochage, et il est caractérisé en ce que lesdits organes d'accrochage sont constitués par des bras pivotants sur lesquels sont usinés les pôles du rotor.

L'invention sera mieux comprise à l'aide de la description suivante d'un exemple de réalisation, en référence aux dessins annexés dans lesquels:

— la fig. 1 représente schématiquement le dispositif de commande de barre de réglage avec la vis en position haute d'accrochage,

— la fig. 2 est une vue du même dispsotif avec la barre en position basse extrême, la vis étant accrochée.

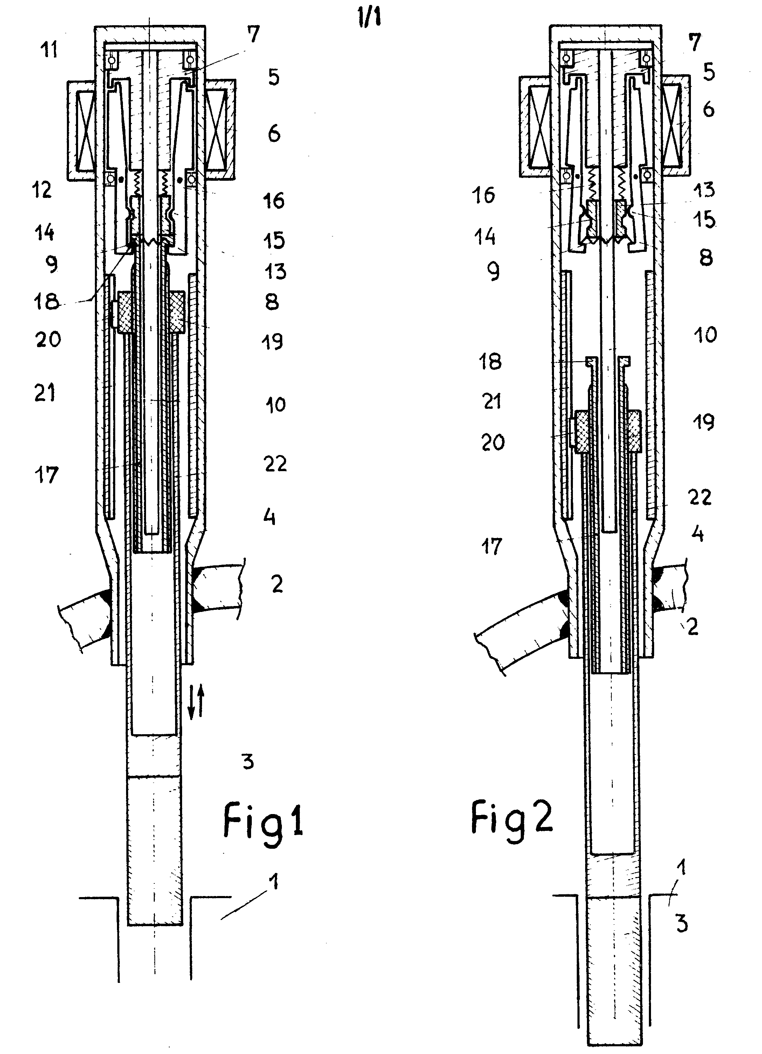

Sur la fig. 1, on a représenté schématiquement en 1 le coeur du récteur nucléaire, en 2 son enceinte pressurisée et en 3 une des barres de réglage. Le mécanisme de commande de la barre 3 est, de manière classique, enfermé dans une enceinte sous pression 4 en forme de tube clos sur le dessus qui assure la rétention du fluide primaire; conformément à l'invention ce mécanisme comporte:

— un moteur pas à pas à réluctance 5 dont le stator 6 est disposé à l'extérieur et autour de l'enceinte 4, le rotor 7 étant placé, de manière classique, à l'intérieur de ladite enceinte. Selon l'invention, le noyau central du rotor 7 supporte deux bras pivotants 8 sur lesquels sont usinés les pôles dudit rotor. Les bras 8 forment une pince qu'un ressort 9 placé à sa partie inférieure tend à ouvrir. Le maintien des parties tournantes sur la partie intérieure de l'enceinte 4 est par ailleurs assuré par roulements à billes (11, 12),

— également attelée au rotor 7, une tige cannelée 10, occupant l'axe vertical du mécanisme et de longueur supérieure à la course de la barre de réglage 3,

— montée coulissante sur la tige cannelée 10 de manière à tourner avec elle, une douille 13 munie d'un évidement 14 dans lequel viennent s'engager des ergots correspondants 15 de la partie inférieure des bras 8, lorsque la pince qu'ils forment est refermée. La douille 13 est reliée au rotor 7 par un ressort 16 qui tend à la repousser vers le bas,

— une vis 17 montée coulissante sur la tige cannelée 10 de manière à rester, comme la douille 13, toujours en prise avec elle. Dans la position de réglage de réactivité du réacteur représentée sur la fig. 1, cette vis 17 est bloquée en translation par les bras 8 qui l'enserrent à sa partie supérieure qui elle-même présente un épaulement 18 en conséquence,

— un écrou 19 en prise avec la vis 17, libre en translation et immobilisé en rotation par une clavette 20 coulissant dans une rainure longitudinale 21,

— une tige de commande tubulaire 22 reliant l'écrou 19 et la barre de réglage 3.

Le fonctionnement du dispsotif pour la compréhension duquel on se réfèrera également à la fig. 2, est le suivant:

Lorsque le stator 6 du moteur pas à pas 5 est sous tension, il attire la partie supérieure des bras pivotants 6, ce qui permet le maintien, par son épaulement 18, de la vis 17 en position haute.

Pour réaliser un déplacement lent de la barre 3, on alimente les bobines 6 de manière à créer dans le stator un champ tournant qui provoque la rotation du rotor 7 entraînant lui-même, par l'intermédiaire de la tige cannelée 10, la rotation de la vis 17. L'écrou 19, immobilisé en rotation, se déplace alors longitudinalement sur la vis 17, elle-même immobilisée en translation, ce qui permet l'insertion lente ou l'extraction lente de la barre 3, qui lui est accouplée par l'intermédiaire de la tige de commande tubulaire 22.

Pendant ces opérations, comme on le voit sur la fig. 1, la douille de verrouillage 13 est dans sa position haute, le ressort 16 étant comprimé et les ergots 15 sont engagés dans l'évidemment 14 de façon à permettre aux bras pivotants 8 de se fermer en maintenant la vis 17 en position haute.

L'insertion rapide (fig. 2) de la barre de commande 3 dans le coeur 1 du réacteur est obtenue par coupure de l'alimentation électrique du stator 6 du moteur pas à pas 5. Sous l'action du ressort 9, et du poids de l'ensemble vis + écrou + tige de commande + barre de réglage, les bras pivotants 8 s'ouvrent et libèrent l'ensemble constitué par la vis 17, l'écrou 19, la tige de commande 22 et la barre de réglage 3. La barre 3 chute alors dans le coeur jusqu'à sa position d'insertion maximale ce qui provoque l'arrêt du réacteur. Lors de l'ouverture des bras 8, la douille 13, libérée des ergots 15, descend sous l'action du ressort 16, ce qui, comme on le voit sur le dessin, bloque les bras 8 en position ouverte.

La remontée de la barre de commande 3, suite à cette insertion rapide, nécessite la remontée préalable de la vis 17. Ceci est réalisé grâce à la tige cannelée 10 qui reste en prise avec la vis 17, même lorsque cette dernière est dans sa position la plus basse. On fait alors tourner le moteur dans le sens entraînant normalement la descente de la barre de commande 3, ce qui entraîne la remontée de la vis 17. Il est à noter que la mise sous tension du stator 6 du moteur 5 ne provoque pas le basculement des bras 8, puisque ces derniers sont bloqués en position ouverte par la douille de verrouillage 13.

Lorsque la vis 17 arrive en position haute, sa partie supérieure entre en contact avec la face inférieure de la douille 13 et pousse cette dernière vers le haut, le ressort 16 se comprimant. Lorsque l'évidement 14 usiné sur la douille 13 arrive à hauteur des ergots 15, les bras pivotants 8 se referment sous l'effet de la force d'attraction exercée par le stator 6 sur la partie haute de ces bras pivotants. La vis 17 se retrouve ainsi immobilisée en translation et il est alors possible de commander à nouveau l'exécution de déplacements lents de la barre de réglage 3 par rotation du moteur 5.

L'invention trouve son utilisation dans le domaine de la production d'énergie par réacteur nucléaire.

## Revendications

1. Dispositif de commande de barre de réglage (3) de réacteur nucléaire du type comportant une enceinte tubulaire étanche (4) associée à un moteur d'entraînement (5) dont le rotor (7) est situé à l'intérieur de ladite enceinte et le stator (6) à l'extérieur de celle-ci, la rotation dudit moteur entraînant la montée ou la descente de la barre de réglage par l'intermédiaire d'une transmission (17, 19) du genre vis-écrou, ledit rotor étant muni d'organes d'accrochage (8) de ladite vis en position haute de celle-ci, lesdits organes d'accrochage étant commandés par action électromagnétique à partir des bobines dudit stator de façon à ce qu'ils soient en position de fermeture sur ladite vis lorsque lesdites bobines sont alimentées, et à ce qu'ils se mettent en position d'ouverture lorsque lesdites bobins ne sont plus alimentées de façon à laisser choir l'ensemble vis-écrou, ledit dispositif comportant en outre un organe (13) de verrouillage desdits organes d'accrochage permettant de maintenir ceux-ci en position ouverte lorsque ladite vis n'est pas en position haute d'accrochage, et lesdits organes d'accrochage étant constitués par des bras pivotants sur lesquels sont usinés les pôles du rotor.

2. Dispositif de commande selon la revendication 1, caractérisé en ce que l'organe de verrouillage est constitué par une douille coaxiale à ladite transmission (17, 19) et munie d'au moins un évidement (14) permettant de contenir au moins un ergot (15) de la partie inférieure desdits bras pivotants.

**Patentansprüche**

1. Vorrichtung zum Steuern einer Kernreaktorregelstange (3) bestehend aus einer dichten einem Antriebsmotor (5) zugeordneten rohrförmigen Umhüllung (4), wobei der Läufer (7) innen in der Umhüllung und der Stator (6) außerhalb derselben angeordnet sind und wobei die Drehbewegung des Motors das Heben und Senken der Regelstange über ein Triebwerk (17, 19) mit Schraubensystem bewirkt, der Läufer Einhängemittel (8) für diese Schraube in deren oberen Stellung umfaßt und die Einhängemittel durch die elektromagnetische Wirkung der Wicklungen dieses Stators derart betätigt werden, daß sie bei der Stromversorgung der Wicklungen in der Schließstellung an der Schraube sind, und in der Öffnungsstellung, wenn die Wicklungen nicht mehr versorgt werden, so daß sie das Schraubensystem fallen lassen, Vorrichtung, die zum Halten der Einhängemittel in der Öffnungsstellung außerdem ein Verriegelungsglied (13) für diese aufweist, wenn die Schraube sich nicht in der oberen Einhängestellung befindet, wobei diese Einhängemittel aus Schwenkarmen mit den darin bearbeiteten Läuferpolen bestehen.

2. Steuervorrichtung nach Anspruch 1, dadurch gekennzeichnet, daß das Verriegelungsglied aus einer zum Triebwerk (17, 19) koaxial angeordneten Hülse besteht, die mindestens eine Aussparung (14) zur Aufnahme mindestens eines Vorsprungs (15) des unteren Teils der Schwenkarme aufweist.

**Claims**

1. A device for operating a control rod (3) of a nuclear reactor of the type comprising a leaktight tubular enclosure (4) associated with a driving motor (5) whose rotor (7) is placed inside the said enclosure and the stator (6) is placed outside the latter, the rotation of the said motor producing the rise or the descent of the control rod by means of a transmission (17, 19) of the screw-and-nut variety, the said rotor being equipped with components for clutching (8) the said screw in its high position, the said clutching components being operated by means of an electromagnetic effect by the coils of the said stator so that they are in a closed position on the said screw when the said coils are energised, and so that they come into an open position when the said coils are no longer energised so as to allow the screw-and-nut unit to drop, the said device furthermore comprising a component (13) for locking the said clutching components enabling the latter to be held in an open position when the said screw is not in a high clutching position, and the said clutching components consisting of pivoting arms on which the rotor poles are machined.

2. An operating device according to claim 1, characterised in that the locking component consists of a socket coaxial with the said transmission (17, 19) and provided with at least one recess (14) enabling at least one stop (15) on the lower part of the said pivoting arms to be held.

Fig1

Fig2